(19) **Europäisches Patentamt**
**European Patent Office**
**Office européen des brevets**

(11) **EP 2 110 750 B1**

(12) **EUROPEAN PATENT SPECIFICATION**

(45) Date of publication and mention
of the grant of the patent:
**22.03.2017 Bulletin 2017/12**

(51) Int Cl.:
***G06F 11/34*** *(2006.01)*

(21) Application number: **08155214.3**

(22) Date of filing: **25.04.2008**

(54) **DATA ACCESS TRACING**

DATENZUGRIFFSVERFOLGUNG

SUIVI DE L'ACCÈS AUX DONNÉES

(84) Designated Contracting States:
**DE FR GB**

(30) Priority: **18.04.2008 US 106251**

(43) Date of publication of application:
**21.10.2009 Bulletin 2009/43**

(73) Proprietor: **MediaTek Inc.**
**Hsin-Chu 300 (TW)**

(72) Inventors:
• **Jandhyala, Ramesh**
**Cedar Park, TX 78613 (US)**
• **Kannan, Srikanth**
**Cedar Park, TX 78613 (US)**
• **Lee, Li**
**Billerica, MA 01821-2806 (US)**

(74) Representative: **Hoefer & Partner Patentanwälte**
**mbB**
**Pilgersheimer Straße 20**
**81543 München (DE)**

(56) References cited:
EP-A- 1 349 074         EP-B1- 2 156 301
WO-A- 99/57640         US-A1- 2005 091 643
US-A1- 2006 255 972     US-B1- 6 182 022
US-B1- 6 347 383        US-B1- 6 918 065
US-B2- 8 316 214

• **JOHNSON E E ET AL: "PDATS. LOSSLESS ADDRESS TRACE COMPRESSION FOR REDUCING FILE SIZE AND ACCESS TIME" PROCEEDINGS OF THE ANNUAL INTERNATIONAL PHOENIX CONFERENCE ON COMPUTERS AND COMMUNICATIONS. PHOENIX, APR. 12 - 15, 1994; [PROCEEDINGS OF THE ANNUAL INTERNATIONAL PHOENIX CONFERENCE ON COMPUTERS AND COMMUNICATIONS], NEW YORK, IEEE, US, vol. CONF. 13, 12 April 1994 (1994-04-12), pages 213-219, XP000462559**
• **SAMPLES AD: "Mache: No-Loss Trace Compaction" ACM SIGMETRICS PERFORMANCE EVALUATION REVIEW, vol. 17, no. 1, 1989, pages 89-97, XP002513761 ACM**
• **JOHNSON E E ET AL: "Lossless Trace Compression" IEEE TRANSACTIONS ON COMPUTERS, IEEE SERVICE CENTER, LOS ALAMITOS, CA, US, vol. 50, no. 2, 1 February 2001 (2001-02-01), pages 158-173, XP002506580 ISSN: 0018-9340**
• **JOHN L K ET AL: "Locality-Based Online Trace Compression" IEEE TRANSACTIONS ON COMPUTERS, IEEE SERVICE CENTER, LOS ALAMITOS, CA, US, vol. 53, no. 6, 1 June 2004 (2004-06-01), pages 723-731, XP011111505 ISSN: 0018-9340**

- KETTERLIN A ET AL: "Prediction and trace compression of data access addresses through nested loop recognition" PROCEEDINGS OF THE 2008 CGO - SIXTH INTERNATIONAL SYMPOSIUM ON CODE GENERATION AND OPTIMIZATION - PROCEEDINGS OF THE 2008 CGO - SIXTH INTERNATIONAL SYMPOSIUM ON CODE GENERATION AND OPTIMIZATION 2008 ASSOCIATION FOR COMPUTING MACHINERY US, 10 April 2008 (2008-04-10), pages 94-103, XP002513722

## Description

## BACKGROUND

This description is related to data access tracing.

Embedded processors may include a digital signal processor and a memory on a single chip. The memory may incorporate a cache memory to take advantage of temporal and spatial locality of data access patterns. In some examples, use of the cache memory may result in overhead due to cache fills and copybacks. When the processor encounters a cache miss, the cache hardware may fill a cache line from a lower level in the memory hierarchy. In a cache fill, the memory operation that produced the cache miss may stall the processor and wait for the data to be read from memory.

Eric E. Johnson et al. describes in "Lossless Address Trace Compression For Reducing File Size and Access Time", Proceedings of the annual international Phoenix Conference on Computers and Communications, New York, IEEE, US, Vol. Conf. 13, 1994, pages 213 to 219, an information-lossless trace compression scheme that can reduce both storage space and access time by an order of magnitude or more, compared to ASCII-format traces, without discarding either references or inter-reference timing from the original trace. Although Packed Differential Address and Time Stamp (PDATS) was developed independently of Mache both use a similar idea of data compression: rather than storing an address sequence explicitly, only the address difference between successive references of the same type are stored.

A. Dain Samples describes in "Mache: No-Loss Trace Compaction", ACM Sigmetrics Performance Evaluation Review, vol. 17, no. 1, 1989, pages 89 to 97, that execution traces can be significantly compressed using their referencing location. A simple observation leads to a technique capable of compression execution traces by an order of magnitude; instruction-only traces are compressed by two orders of magnitude.

US 6,918,065 B1 describes a system for performing non-intrusive trace is provided which receives trace information from one or more processors. The trace system may be configured by a user to operate in various modes for flexibly storing or transmitting the trace information. The trace system includes a FIFO which is memory-mapped and is capable of being accessed without affecting processor performance. In one aspect, the trace system includes a trace buffer which receives trace information at an internal clock speed of the processor. In another aspect, a compression protocol is provided for compressing trace messages on-chip prior to transmitting the messages to an external system or storing the messages in memory.

Eric E. Johnson et al. describe in "Lossless Trace Compression", IEEE Transactions on Computers, vol. 50, no. 2, February 2001, pages 158 to 173, a range of information-lossless address and instruction trace compression schemes that can reduce both storage space and access time by an order of magnitude or more, without discarding either references or interreferences timing information from the original trace.

WO 99/57640 A1 describes an integrated circuit that includes a performance monitoring circuit which includes an adaptive adder circuit coupled to receive a first input signal indicative of a performance parameter of the integrated circuit and to provide a count value as a measure of the probability of the performance parameter. The adaptive adder circuit includes a random number generator circuit providing a random number, a counter circuit providing a count value and a comparator circuit coupled to compare the random number and the count value and to output a compare signal indicative thereof, the compare signal being provided to the counter as an up/down count signal. The adaptive adder circuit also includes a first logic circuit coupled to receive the performance parameter being measured and the compare signal which outputs a first signal which is used for controlling operation of the counter circuit. The counter circuit is responsive to count up or down when the first input signal and the compare signal are at different values and the counter circuit does not count when the first input signal and the compare signal are at the same value.

US 6,182,022 B1 describes a system and a method for automatically constructing a baseline for an attribute of a monitored system, calculating a threshold based on the constructed baseline, and feeding the threshold back into the monitored system is presented. In accordance with US 6,182,022 B1, a metric corresponding to an attribute of interest of a monitored system is extracted and compared with a current normal threshold associated with the attribute. An event notification is generated if the extracted metric is not within a limit defined by the current normal threshold. A baseline is calculated based on a relevant subset of extracted metrics, from which a new current normal threshold is calculated. The current normal threshold is reconfigured with the new current normal threshold.

## SUMMARY

The present invention provides a method for tracing data addresses according to claim 1 and an apparatus for tracing data addresses according to claim 10. Preferred embodiments are described in the dependent claims.

Implementations may include one or more of the following features.
Determining a difference can include determining a minimum absolute difference between the current data address and two or more previous data addresses in the moving window history. Maintaining a moving window history can include maintaining a read history of one or more previous read data addresses accessed by the processor. Determining the minimum absolute difference can include determining a minimum absolute difference between a current read data address and the previous read data addresses in the moving window history. Maintaining a moving window history can include maintaining a write history of one or more previous write data addresses accessed by the processor. Determining the minimum absolute difference can include determining a minimum absolute difference between a current write data address and the previous write data addresses in the moving window history. Maintaining a moving window history can include storing the previous data addresses in a first-in, first-out buffer. Determining the minimum absolute difference can include calculating an absolute difference between the current data address and each of the two or more previous data addresses in the history, and selecting the minimum absolute difference from the calculated absolute differences. The moving window history can be updated. Updating the moving window history can include adding the current data address to the history and removing an oldest previous data address from the history.

In general, in another aspect, memory addresses that are accessed by a processor are received; the addresses are compressed to generate compressed addresses; and the compressed addresses are outputted.

Implementations may include one or more of the following features. Compressing the addresses can include determining a difference between a current address and a previous address, and outputting the difference as a representation of the current address. Compressing the addresses can include maintaining a history of at least one previous address accessed by the processor, determining a minimum difference between a current address and at least one previous address, identifying an index associated with the previous address, and outputting the difference and the index as a representation of the current address. Compressing the addresses can include identifying a second sequence of accesses that is a repeat of a first sequence of accesses, determining a length of the second sequence of accesses, and determining a starting point of the second sequence of accesses relative to the first sequence of accesses. Compressing the addresses can include maintaining a history of at least one previous address accessed by the processor, determining a minimum difference D between a current address A and the at least one previous address, and determining an index K associated with the previous address. Compressing the addresses can include reducing the values of an address A, a difference D, and an index K into byte-sized packets, outputting the difference D and index K as a representation of the address A if the number of bits needed to represent D is less than a threshold, and outputting the address A if the number of bits needed to represent the difference D is above the threshold. Compressing the addresses can include examining addresses represented as a sequence of packets {K, D} and identifying a second sequence of accesses that is a repeat of a first sequence of accesses, identifying a length L of the second sequence of accesses, and identifying a starting point P of the second sequence of accesses relative to the first sequence of accesses.

In general, in another aspect, a buffer memory maintains a moving window history of at least one previous data address accessed by a processor, each of at least one previous data address in the moving window history being associated with an index. A compression circuit determines a difference between a current data address and at least one previous data address in the moving window history, and provides, as a representation of the current data address, the difference and the index associated with at least one previous data address in the moving window history.

Implementations may include one or more of the following features. The compression circuit can be configured to determine a minimum absolute difference between the current data address and two or more previous data addresses in the moving window history, and to provide, as the representation of the current data address, the minimum absolute difference and its sign, and a corresponding index. The memory device can include a read history buffer to maintain a read history of one or more previous read data addresses. The compression circuit can be configured to determine a minimum absolute difference between a current read data address and the previous read data addresses in the read history buffer. The memory device can include a write history buffer to maintain a write history of one or more previous write data addresses. The compression circuit can be configured to determine a minimum absolute difference between a current write data address and the previous write data addresses in the write history buffer. The memory unit can include a first-in, first-out buffer. The compression circuit can be configured to calculate an absolute difference between the current data address and each of the two or more previous data addresses in the history and to select the minimum absolute difference from the calculated absolute differences. The compression circuit can be configured to update the moving window history, for example, by adding the current data address to the history and removing an oldest previous data address from the history.

In general, in another aspect, a memory device has addresses; a processor accesses the addresses in the memory device; and a data trace module compresses the addresses accessed by the processor to generate compressed addresses and output the compressed addresses.

Implementations may include one or more of the following features. The data trace module can include a history based compression unit that determines a difference between a current address and a previous address, and outputs the difference as a representation of the current address. The data trace module can include a history based compression unit that determines a minimum difference between a current address and at least one previous address, identifies an index associated with the previous address, and outputs the difference and the index as a representation of the current address. The data trace module can include an interval based compression unit that identifies a second sequence of accesses that is a repeat of a first sequence of accesses, and outputs a first value and a second value to represent the second sequence of accesses, the first value representing a length of the second sequence of accesses and the second value representing a starting point of the second sequence of accesses.

In general, in another aspect, an integrated circuit includes a processor, and a data trace module to trace data addresses accessed by the processor and generate an output representing the data addresses.

Implementations may include one or more of the following features. The integrated circuit can include a memory, and the data trace module traces data addresses of the memory accessed by the processor. The data trace module can trace data addresses of an external storage accessed by the processor, the external storage being external to the integrated circuit. The external storage can include dynamic random access memory, static random access memory, and/or flash memory. The data trace module can compress the data addresses, and the output of the data trace module can include compressed data addresses.

The data trace module can compress some of the data addresses using a history-based compression by comparing a difference between a current data address and a previous data address, and using the difference to represent the current data address. The data trace module can compress some of the data addresses using an interval-based compression by matching a current sequence of data addresses with a previous sequence of data addresses, and using a length of the current sequence of data addresses and an offset between the current and previous sequences of addresses to represent the current sequence of addresses. The data trace module can compress some of the data addresses into byte-size packets. The data trace module can be selectable between a first state in which the data addresses are compressed using a history-based compression and an interval-based compression, and a second state in which the data addresses are compressed using the history-based compression but not the interval-based compression.

The data trace module can provide a complete trace of all data addresses accessed by the processor. The data trace module can include a buffer to temporarily store the data addresses accessed by the processor. In some examples, the data trace module can perform lossy compression of the data addresses when the buffer overflows. The data trace module can generate a synchronization signal when the buffer overflows. In some examples, the data trace module can stall the processor when there are more data addresses than can be processed by the data trace module. The data trace module can generate a synchronization signal indicating a beginning of a segment of data addresses. In some examples, the data trace module can generate the synchronization signal based on a counter value and a determination that a pause occurred in the data addresses input to the data trace module. The processor and the data trace module can be located in a same core in the integrated circuit, in which the processor operates at a first frequency. The integrated circuit can include a second core having a second processor operating at a second frequency and a second data trace module to trace data addresses accessed by the second processor.

These and other aspects and features, and combinations of them, may be expressed as methods, apparatus, systems, means for performing functions, program products, and in other ways.

Advantages of the aspects and features include one or more of the following. Addresses accessed by a processor can be logged and analyzed. Based on the address trace information, software applications can be optimized for particular hardware configurations. Similarly, hardware applications can be optimized for particular software applications. The information about accesses to memory addresses can be used to optimize, e.g., the cache memory size, cache line size, replacement policy, granularity in marking portions of the dirty cache line, and allocation of L1 and L2 caches.

The details of one or more embodiments of the invention are set forth in the accompanying drawings and the description below. Other features, objects, and advantages of the invention will be apparent from the description and drawings, and from the claims.

**DESCRIPTION OF DRAWINGS**

FIG. 1 is a block diagram of an example processing system incorporating a data trace module.

FIG. 2 is a schematic block diagram of an example data trace module.

FIG. 3 shows a flow diagram of an example process for performing interval-based compression.

FIG. 4 shows a flow diagram of an example process for reducing information into byte-sized packets.

FIG. 5 is a block diagram of an example history-based compression block.

FIG. 6 is a flow diagram of an example process for performing history-based compression.

FIG. 7A shows an example listing of an input trace of addresses.

FIG. 7B shows an example listing of addresses in a buffer of the history-based compression block.

FIGS. 7C and 7D show an example listing of addresses in a buffer of the interval-based compression block.

FIG. 7E shows an example listing of byte-sized packets.

FIG. 7F shows an example listing of reconstructed packets.

Like reference symbols in the various drawings indicate like elements.

## DETAILED DESCRIPTION

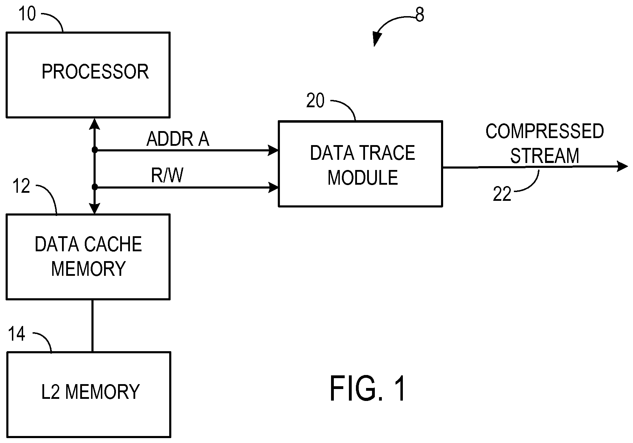

Referring to FIG. 1, an example processing system 8 includes a data trace module 20 to monitor data addresses accessed by a processor 10. The output of the data trace module can be a compressed stream that, when decompressed, includes information about the address and a read/write indicator for each access. Information about the data addresses being accessed can be analyzed to improve a performance of the system 8 (e.g., to reduce cache misses).

The processor 10 accesses a data cache memory 12 to obtain data for executing instructions. The processor 10 may be a digital signal processor, a microcontroller or a general purpose microprocessor. The data cache memory 12 is a relatively small capacity, high-speed memory. When data required by the processor 10 is present in the data cache memory 12 (a cache hit), a high-speed operation can be achieved. When the data required by the processor 10 is not present in the cache memory 12 (a cache miss), a cache fill operation is performed to access the required data in a level 2 (L2) memory 14. In a cache fill operation, a line of cache memory is copied back to the L2 memory 14 in order to make room for the new data in the cache memory 12. Because frequent cache misses may cause delay and reduce performance, analyzing the memory access pattern of the processor 10 may provide information can be used to adjust system parameters, such as the sizes of the cache memory 12 and the L2 memory 14, to reduce cache misses and thereby improving system performance.

For example, the information about accesses to memory addresses can be useful in determining the impact of a bigger cache memory, the impact of a more associative cache memory, the impact of a different cache line size, the impact of a different replacement policy, the impact of greater granularity in marking portions of the cache line dirty, and the impact of moving data structures from L1 memory to external cache memory.

In the example of FIG. 1, the data trace module 20 is used to monitor data addresses accessed by the processor 10 in the data cache memory 12. The data trace module 20 receives each address A supplied by the processor 10 to the data cache memory 12 and a read/write (R/W) signal that indicates whether the data access is a read operation or a write operation. The data trace module 20 supplies a compressed stream of data addresses 22 for off-chip analysis of hardware and software performance. The compressed stream of data addresses 22 can provide information about the addresses associated with accesses. In some examples, the compressed stream also includes information about the type of the accesses (e.g., read access, write access, or cache control). Different software applications executing on a same hardware configuration may have different performances. By analyzing the data addresses accessed by the processor 10 while executing software applications, the software applications can be optimized with respect to particular hardware configurations. Similarly, hardware configurations can be optimized for particular software applications.

In some implementations, the data trace module 20 can provide the user options to reduce the bandwidth of output compressed stream of data addresses 22. This can be useful in situations where the processor 10 executes an application that results in a large number of data accesses that overwhelms the trace module. For example, the data trace module 20 can allow the user to set the following options:

(1) Tracing within an address range defined in a MIN and MAX address.
(2) Tracing outside an address range defined in a MIN and MAX address.
(3) Tracing specific categories of accesses, such as accesses that hit an internal L1 cache or an internal L1 static random access memory (SRAM),

    (i) within an address range defined in a MIN and MAX address,
    (ii) outside an address range defined in a MIN and MAX address.

(4) Tracing only off-core bus activity,

    (i) within an address range defined in a MIN and MAX address,
    (ii) outside an address range defined in a MIN and MAX address.

(5) Filtering cache control instructions for user specific cache management.
(6) Filtering based on a wide range of performance monitoring events (e.g., cache misses in specific regions, or nth occurrence of a cache miss).

The data trace module 20 can be used in any product that analyzes the behavior of a chip. In some implementations, the data trace module 20 and the processor 10 can both reside in the same chip or integrated circuit. The data trace module 20 can be placed inside the processor core or outside the core. The processor 10 and the data cache memory 12 can reside in the same chip. The data cache memory 12 can be inside the processor core boundary or outside the core. The data trace module 20 generates a compressed address stream that is sent outside of the chip, where the address stream is reconstructed outside of the chip for further analysis and debugging.

It is useful to place the data trace module 20 and the processor 10 in the same chip when the processor 10 operates at a high frequency (e.g., several hundred megahertz or even gigahertz). In some examples, the data rate for the address information may be higher than the data rate that can be accommodated by the pads that communicate on-chip data to external circuitry. Placing the data trace module 20 in the same chip as the processor 10 can prevent a loss of data, thereby providing a complete trace of the data addresses accessed by the processor. This can also prevent tying up the use of expensive pads for a debug and development application. When the data trace module 20 is placed in the same core or chip as the processor 10, the addresses that can be traced by the data trace module 20 are not limited to addresses belonging to on-core or on-chip memory units. The data trace module 20 can also trace addresses going to off-core or off-chip memory units.

The data trace module 20 is useful in tracing a large number of accesses to data addresses when running particular applications. For example, an MPEG video decoder application may cause the processor 10 to access data very 2 clock cycles. If the processor 10 is operating at 260 MHz, the stream of data addresses will have a bandwidth of 520 megabytes per second. The data trace module can trace multiple streams of addresses at high frequencies of operation. The addresses are not limited to those of cache memory chips. The addresses can also be those of dynamic random access memory devices, static random access memory devices, flash memory devices, hard drives, or optical disc drives, etc.

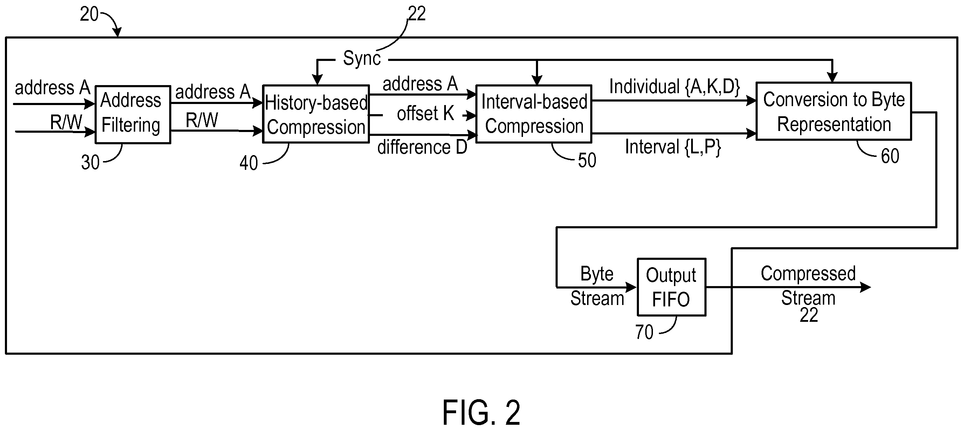

Referring to FIG. 2, in some implementations, the data trace module 20 includes an address filtering block 30, a history-based compression block 40, an interval-based compression block 50, a conversion-to-byte representation block 60 and an output FIFO 70.

The address filtering block 30 may be controlled by a configuration register and may include or exclude certain types of accesses and may shift (e.g., right shift) the data addresses by a programmable value, such as from zero to seven. The address filtering block 30 can be used to reduce the number of addresses that is being traced based on the user configurable options described above.

The history-based compression block 40 keeps a history of the addresses of past accesses, and compresses the address information by finding the difference between the current access address and the addresses of N previous accesses. The current address is encoded as a difference of D bytes from the K-th previous access. The parameters K and D are referred to as the offset and the difference, respectively. Because accesses to memory tend to show some locality, D often takes only a few bits to represent.

The history-based compression block 40 receives current data addresses A and the corresponding read/write signals from the address filtering block 30, and outputs addresses A, offsets K, and differences D signals to the interval-based compression block. In the examples below, each data address is 32 bits. However, the data address can also be represented using other number of bits. The history-based compression block 40 will be described in more detail later in this document.

The interval-based compression block 50 finds redundancies between groups of consecutive data accesses. The intuition is that some execution sequences cause patterns of consecutive accesses. For example, the {K, D} sequence maybe

1. {3,1}
2. {3,0}
3. {4, 2}
4. {2,1}
5. {1,6}
6. {3,1})
7. {3,0}
8. {4,2}
9. {2,1}

In this case, the interval-based compression process would represent accesses 6 to 9 as a repeat of accesses 1 to 4. The accesses 6 to 9 can be encoded in a message of the form "An interval of length 4, starting from 5 accesses ago." Each interval can be defined by L, the length of the interval, and P, the starting point of the interval as a relative reference from the first access of the interval. In the example above, L = 4 and P = 5.

In one implementation, the interval-based compression can be performed by maintaining a history of the past 8 accesses in {K, D} form, and encoding intervals of up to 8 accesses using in one packet {L, P}. In this example, L and P are both allowed a maximum value of 8. The output of the interval-based compression block 50 can be one of two types of packets: (1) an individual access packet [A, D, K] or (2) an interval packet [L, P].

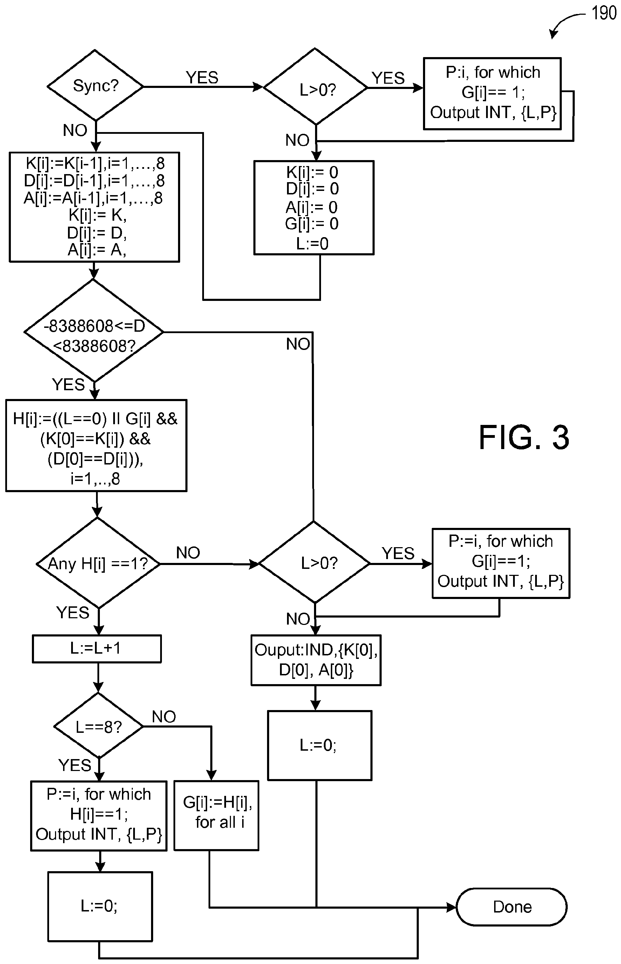

FIG. 3 shows a flow diagram of an example process 190 for performing interval-based compression. For example, the process 190 can be implemented by the interval-based compression block 50. The interval-based compression tries to find a sequence of addresses that matches an earlier sequence of addresses, and outputs a length of the sequence and a position of the sequence relative to the previous sequence. For each new address that comes in, the process 190 determines whether it is adding to the matching sequence, and if not, the matched sequence is sent out, and the new address starts a new sequence. The process 190 adds a new address to a sequence until one of the following three conditions is met: (i) a synchronization signal is received, (ii) the new address does not add to the matching, or (iii) when the interval buffer space runs out.

The data trace module 20 may provide the option to drop the least significant bits from the captured address. The number of bits to drop can be programmable, e.g., from 0 to 7 bits. There may be an option to filter out the uncached L1 SRAM accesses.

The conversion-to-byte representation block 60 converts the packets output from the interval-based compression block 50 into byte-sized packets. This process is designed with two goals: efficiency and synchronization. The block 60 achieves a high compression ratio, using as few bytes as necessary to represent the information. The block 60 also provides a way for an observer of the output stream to "synchronize" to the state of the encoding process, including being able to reconstruct the state of the buffers.

In some examples, the memory space is 4 gigabytes, and the address stream that is being compressed includes a stream of 32-bit addresses. Each packet {A, D, K} or {L, P} can take between 1 and 5 bytes to represent. If the difference D requires more than a threshold, e.g., 24 bits, the data address A, rather than the difference D and the index K, is output. The threshold can increase if the address is represented in a higher number of bits (e.g., 64 bits). In this example, the address encoding itself consumes some of the data bits in the 40-bit output, and a difference D that is more than the threshold cannot be efficiently encoded, so in such cases the full address A is sent. Otherwise, the difference D and the index K are output. The output FIFO 70 provides the compressed address information to an off-chip analysis unit.

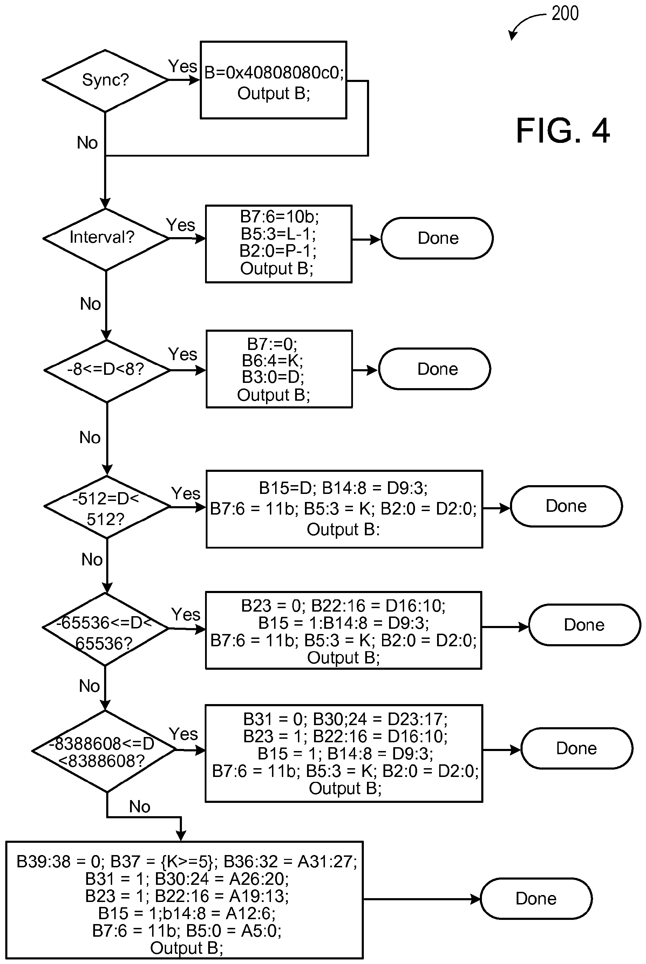

FIG. 4 shows a flow diagram of an example process 200 for reducing information into byte-sized packets. For example, the process 200 can be implemented by using the conversion-to-byte representation block 60.

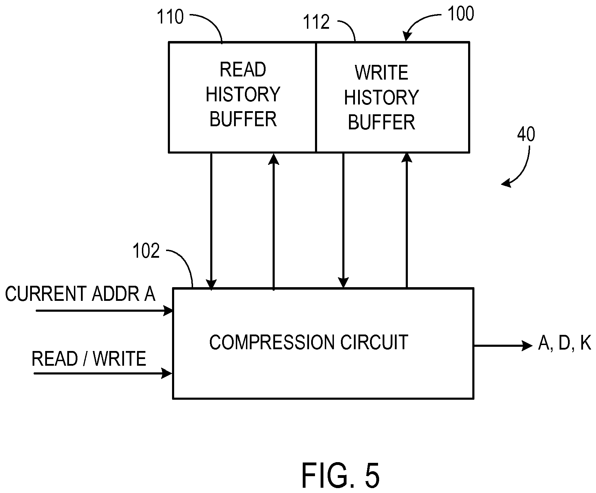

Referring to FIG. 5, in some implementations, the history-based compression block 40 includes a buffer memory unit 100 connected to a compression circuit 102. The memory unit 100 includes a moving window history of data addresses recently accessed by the processor 10. The memory unit 100 includes a read history buffer 110 and a write history buffer 112. The read history buffer 110 includes a moving window history of one or more data addresses accessed by the processor 10 during read operations. Similarly, the write history buffer 112 includes a moving window history of one or more data addresses accessed by the processor 10 during write operations.

In some examples, the read history buffer 110 may include five read data addresses, and write history buffer 112 may include three write data addresses. Each history buffer operates in a first-in, first-out manner. Thus, each current read data address updates the read history buffer 110, and the oldest entry in the read history buffer 110 is replaced. Similarly, each current write data address updates the write history buffer 112, and the oldest entry in the write history buffer 112 is replaced. Each history buffer is a moving window history in the sense that it contains one or more of the most recent data addresses accessed by the processor and is updated by each new read or write data address, as appropriate.

The buffer memory unit 100 can be any memory device that is capable of storing previous data addresses and logic for keeping track of which element in the memory device is to be replaced when the history is updated. In one embodiment, the memory unit 100 is implemented as a FIFO (first-in, first-out) buffer.

The compression circuit 102 receives each current data address and the corresponding read/write signal. The compression circuit 102 outputs a compressed data address based on each current data address and the contents of the corresponding history.

According to the compression technique, a moving window history of previous data addresses is maintained, such that the nth access address A[n] is compared to the addresses in the history, and a difference is computed. Next, the index K of the entry in the history which minimizes the absolute value of the difference is determined. Then, the index K and the signed minimum difference D[K], rather than address A[n], are output and recorded. The sign of the difference is maintained in order to specify whether the current data address is higher or lower than the address in the history. A 32-bit address A[n] requires four bytes per access. By contrast, it has been found that a history containing four previous data addresses permits 70 percent of accesses to be encoded in six bits.

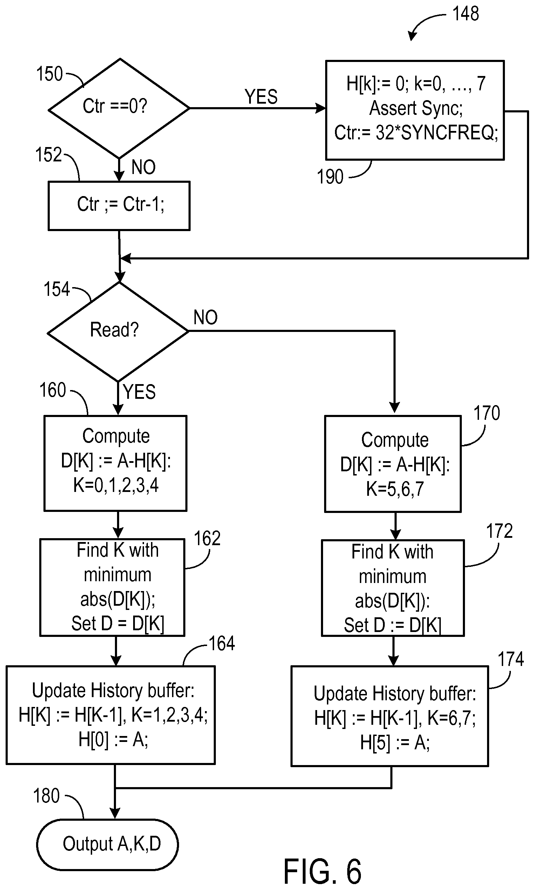

Referring to FIG. 6, a process 148 for compressing data addresses using a moving window history includes the steps described below. For example, the process 148 can be implemented by the history-based compression block 40. In step 150, a count in a counter is tested. If the counter has not reached zero, the counter is decremented in step 152. In step 154, a current data address is identified as a read address or a write address, based on the read/write input signal. In the case of a read address, a difference D[K] is computed for each entry in the read history buffer 110 as follows.

$$D[K] = A - H[K] \qquad (1)$$

for k = 0, 1, 2, 3, 4, where A is the current read address, H[K] is an entry in read history buffer 110 and K is an index of an entry in read history buffer 110. In this example, because the read history buffer includes five read addresses, the index K is selected to have a range from 0 to 4 for read accesses.

In step 162, the index K of the read history buffer entry with the minimum absolute difference D[K] is determined, and the difference D is set to D[K], including the sign of the difference. In step 164, the read history buffer 110 is updated. Each entry in the read history buffer 110 is shifted by one position and the current address A is written to the lowest order location. In effect, the current address replaces the oldest entry in the read history buffer 110.

In the event of a write access, as determined in step 154, a difference D[K] is computed for each entry in the write history buffer 112 in accordance with equation (1) above for k = 5, 6, 7, where A is the current write address, H[k] is an entry in write history buffer 112, and K is an index of an entry in the write history buffer 112. In this example, because the write history buffer includes 3 write addresses, the index K is selected to have a range from 5 to 7 for write accesses. The range of value of the index K for read accesses does not overlap the range of value of the index K for write accesses, so it is possible to determine whether a data address is associated with a read access or a write access based on the index K.

In step 172, the index K of the write history buffer entry with the minimum absolute difference D[K] is determined, and the difference D is set to D[K], including the sign of the difference. In step 174, the write history buffer 112 is updated by replacing the oldest entry with the current address A. In step 180, the values of the current address A, the minimum signed difference D, and the index K corresponding to the minimum absolute difference are output. The current address A is output for cases where the computation of the minimum absolute difference does not result in compression.

In the event that the counter value in step 150 is zero, the history buffers 110 and 112 are cleared in step 190. In addition, a synchronization sequence is output. The frequency of the synchronization sequence can be programmable by a register SYNCFREQ. The history buffers are cleared and a synchronization sequence is sent every N*SYNCFREQ accesses, where N is an integer, e.g., N = 32.

The history buffers 110 and 112 may each include a number of previous data addresses that is different from the examples given above. In general, each history buffer includes one or more previous data addresses. In the limiting case of one previous data address in each history buffer, the calculated difference is the minimum difference. The compression performance may be affected by the number of entries in each history buffer. In some implementations, three to five entries in each history buffer can provide acceptable performance.

The range of the index K may change according to the number of previous data addresses in the history buffers 110 and 112. For example, if the read history buffer 110 stores 10 read address and the write history buffer 112 stores 6 write address, the index K can be in a range from 0 to 9 for read accesses and 10 to 15 for write accesses.

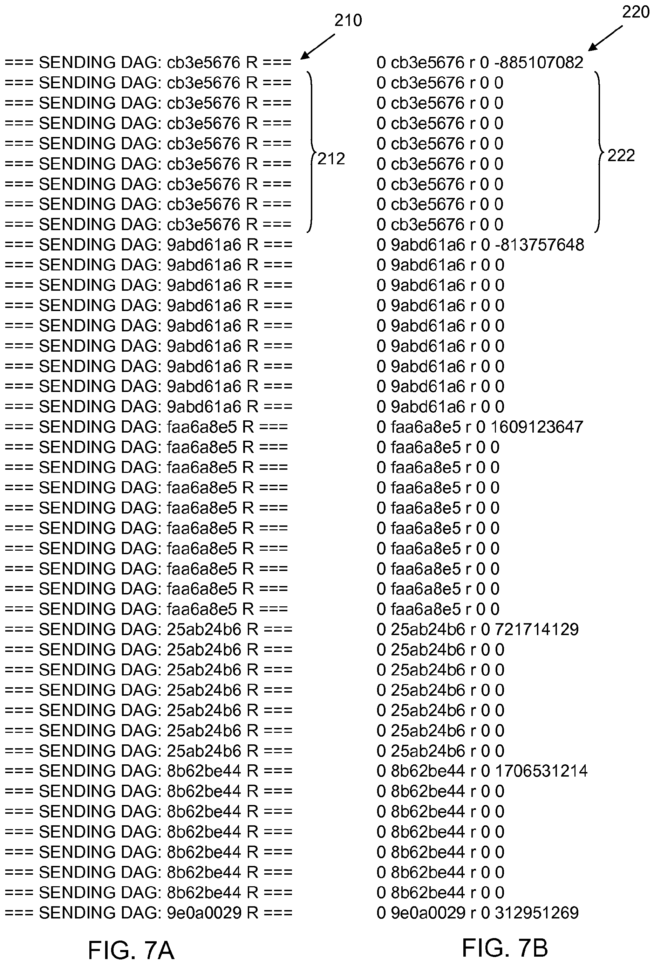

FIG. 7A shows an example listing 210 of an input trace of addresses sent to the address filtering block 30. FIG. 7B shows an example listing 220 of addresses in a buffer in the history compression block 40. The entries 222 in the listing 220 correspond to addresses 212 in the listing 210. Each of the addresses 212 is the same as the previous address, so the entries 222 each show a difference of 0. The history-based compression relies on the characteristic that successive accesses can have a spatial relationship to each other. This increases the chances that an incoming address can be represented using an index and a difference, instead of the original address. For example, the original address can have 32 bits, and the index and the different together can have less than 32 bits. The output of the history-based compression block 40 is sent to the interval-based compression block 50.

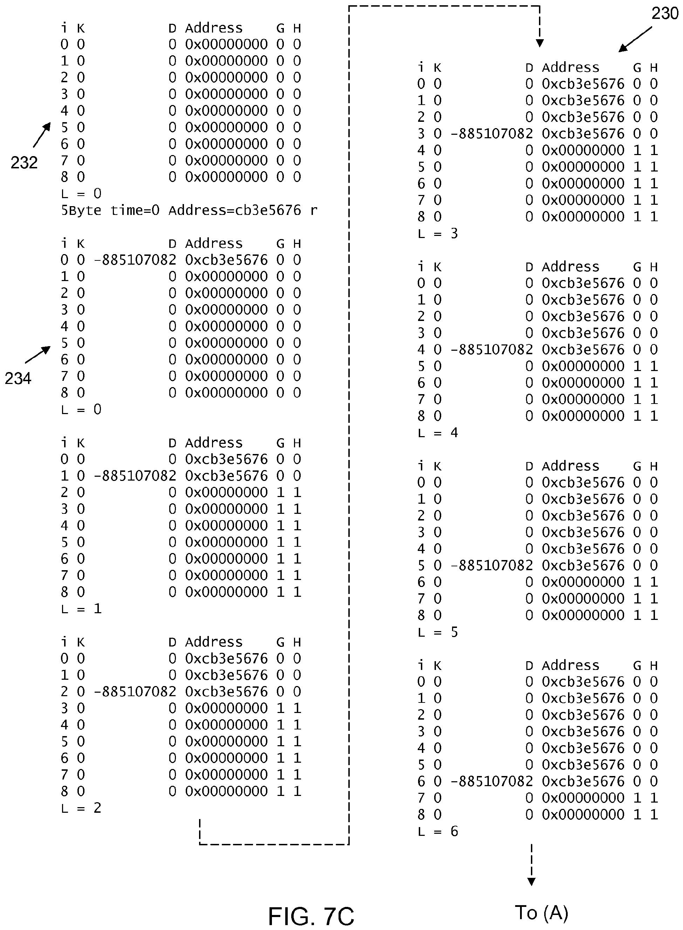

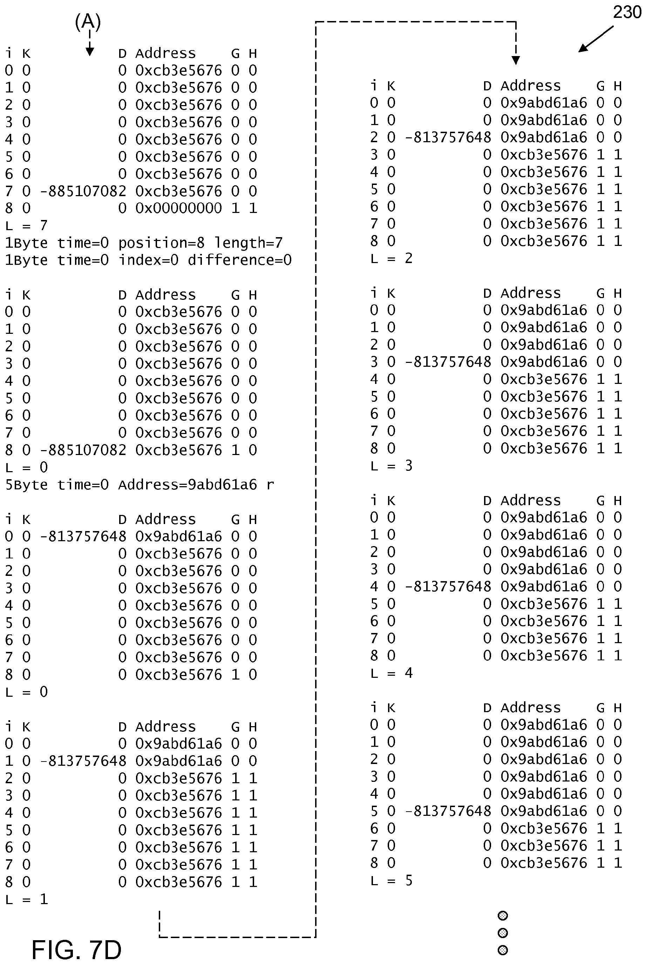

The interval-based compression block 50 takes the index and difference and tries to represent them as packets (groups of indexes and differences). FIGS. 7C and 7D show an example listing 230 of addresses stored in a buffer memory of the interval-based compression block 50. In this example, the buffer memory has 8 entries. Shown in FIGS. 7C and 7D are values of the parameters i, index K, difference D, address A, G, H, length L, and position P that are determined using, e.g., the process 190 of FIG. 3. Initially, the buffer 110 is empty (232). Then a first address is added to the first entry of the buffer 110 (234), and so forth.

The interval compression outputs are sent to the conversion-to-byte representation block 60, which encodes the information to separate the output on byte boundaries. In this example, the worst-case 32-bit address is padded with additional information to be output as five bytes. This allows an output module (not part of the data trace module 20) the flexibility of outputting the compressed trace through the pads through an interface of, e.g., 8, 16, 24, 32, or 40 pins.

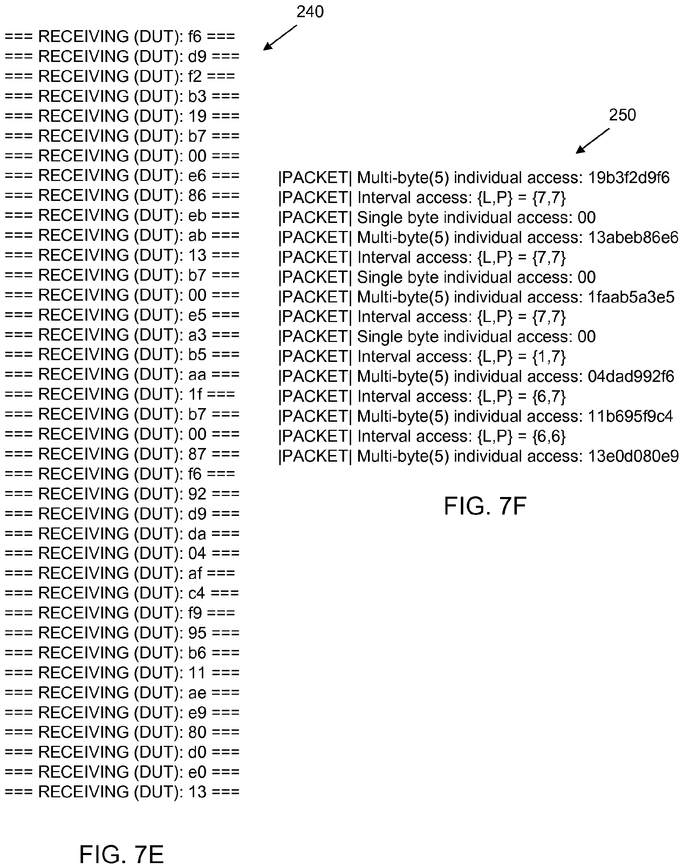

FIG. 7E shows an example listing 240 of byte-sized packets after the addresses have been processed by the history-based compression block 40, the interval-based compression block 50, and the conversion-to-byte representation block 60. Comparing the listings 240 and 210 shows that the byte-sized packets use less bits to represent the addresses than the input trace.

After the trace is sent outside the chip, the information sent out is reconstructed for analysis and debug. For example, if a core having the processor 10 is designed to achieve a specified performance range, and an application executing on the processor 10 has a performance outside of the specified performance range, it would be useful to know what caused the low performance. The compressed stream 22 from the data trace module 20 can be analyzed using software that interprets the compressed stream 22 using the same algorithm for compression but applied in reverse. For example, one can decode the bytes, decompress the stream, and reconstruct the trace. FIG. 7F shows an example listing of packets that are reconstructed from the byte-sized packets. The reconstructed packets indicate the addresses that were accessed and can be further analyzed to optimize the performance of the system.

Although various implementations have been described, other implementations are within the scope of the following claims. For example, the processing system 8 may include a main memory (e.g., dynamic random access memory). When the data required by the processor 10 is not present in either the data cache memory 12 or the L2 memory 14, the processor 10 accesses the required data from the main memory. The data trace module 20 can generate a synchronization (SYNC) signal (e.g., 22 in FIG. 2) to allow a trace that has been interrupted (e.g., due to loss of data at an interface or due to excessive bandwidth requirements) to continue from a known starting point. The SYNC signal can be a re-synchronization point for a producer of addresses and a consumer of the data address trace. In some examples, the data trace module 10 can operate in a mode where a stall from the data trace module 10 stalls accesses from the processor 10 and thereby provide a slowed loss-less trace in a particular mode of operation. For example, the data trace module 20 can send a stall signal to the processor 10 when the data trace module 10 receives more data than can be processed by the data trace module 10.

The data trace module 20 can generate the SYNC signal based on a count value of a counter, so that a SYNC signal is generated periodically every predetermined number of data accesses. In some examples, generating the SYNC signal may interrupt the processing (e.g., compressing) of the data addresses. The data trace module 20 can wait until there is a pause in the incoming stream of data addresses, then generate a SYNC signal so as to reduce the disruption of the processing of the data addresses. In some examples, the data trace module 20 includes a buffer (e.g., a first-in-first-out buffer) placed after the address filtering block 30 to store the incoming data addresses. The buffer can have, e.g., 4 entries. The data trace module 20 can send a SYNC signal when the buffer overflows, indicating that the data trace module 20 is not able to keep up with the incoming address stream. Upon sending the SYNC signal, the data trace module 20 re-starts the trace gathering and compression.

In the example of FIG. 2, the data trace module 20 compresses the data addresses using a history-based compression (e.g., using block 40) and an interval-based compression (e.g., using block 50). When an interval-based compression is used, a sequence of data addresses is represented as {L, P} as described above, and it may be difficult to send additional address specific information (i.e., information specific to a particular address within the interval). The address-specific information can include, e.g., whether the address access resulted in a hit or a miss, whether the access is a cache control access, and/or the type of cache control access, etc.

In some implementations, the data trace module 20 provides an option of turning off the interval-based compression. For example, the data trace module 20 can be selectable between a first state in which the data addresses are compressed using a history-based compression and an interval-based compression, and a second state in which the data addresses are compressed using the history-based compression but not the interval-based compression. By using history-based compression only, the data trace module 20 can output address-specific information along with the compressed address stream. In some implementations, a compression unit that is external to the data trace module 20 can be used to compress the addresses. Some external compression units may perform better than the interval-based compression. The external compression unit may not perform well when interval-based compression is used because information about some addresses is not available without reconstruction of the compressed data. It may be useful to turn off the interval-based compression in this situation.

In some implementations, in a multi-core system, a first core may have a first processor operating at a first frequency (e.g., 400 MHz) and a first data trace module that traces data addresses accessed by the first processor. There may be a second core having a second processor operating at a second frequency (e.g., 250 MHz) and a second data trace module that traces data addresses accessed by the second processor. Having the data trace modules directly on chip within the same integrated circuit as the processors allows the high bandwidth data accesses of the processors operating at different frequencies to be traced. Alternatively, in some examples, a data trace module may trace the addresses accessed by multiple processors.

Various forms of the flows shown above may be used, with steps re-ordered, added, or removed. Various implementations of the systems and techniques described here can be realized in digital electronic circuitry, integrated circuitry, specially designed ASICs (application specific integrated circuits), computer hardware, firmware, software, and/or combinations thereof. Also, although several applications and methods have been described, it should be recognized that numerous other applications are contemplated.

The scope of the invention is defined by the appended claims.

## Claims

1.  A history-based compression method, comprising:

    maintaining a moving window history of two or more previous data addresses accessed by a processor (10), the two or more previous data addresses in the history each being associated with an index;
    determining a minimum absolute difference between the current data address and two or more previous data addresses in the moving window history; and

providing, as a representation of the current address, the minimum absolute difference and its sign, and the index associated with one of the two or more previous data addresses in the history.

2. The method of claim 1, wherein maintaining a moving window history comprises maintaining a read history of one or more previous read data addresses accessed by the processor (10).

3. The method of claim 2, wherein determining the minimum absolute difference comprises determining a minimum absolute difference between a current read data address and the previous read data addresses in the moving window history.

4. The method of claim 1, wherein maintaining a moving window history comprises maintaining a write history of one or more previous write data addresses accessed by the processor (10).

5. The method of claim 4, wherein determining the minimum absolute difference comprises determining a minimum absolute difference between a current write data address and the previous write data addresses in the moving window history.

6. The method of claim 1, wherein maintaining a moving window history comprises storing the previous data addresses in a first-in, first-out buffer.

7. The method of claim 1, wherein determining the minimum absolute difference comprises calculating an absolute difference between the current data address and each of the two or more previous data addresses in the history, and selecting the minimum absolute difference from the calculated absolute differences.

8. The method of claim 1, further comprising updating the moving window history.

9. The method of claim 8, wherein updating the moving window history comprises adding the current data address to the history and removing an oldest previous data address from the history.

10. An history-based compression apparatus, comprising:

a buffer memory (100) to maintain a moving window history of two or more previous data addresses accessed by a processor (10), each of the two or more previous data addresses in the history being associated with an index; and

a compression circuit (102) to determine a minimum absolute difference between the current data address and two or more previous data addresses in the moving window history, and to provide, as the representation of the current data address, the minimum absolute difference and its sign, and a corresponding index.

11. The apparatus of claim 10, wherein the memory device includes a read history buffer (110) to maintain a read history of one or more previous read data addresses.

12. The apparatus of claim 11, wherein the compression circuit (102) is configured to determine a minimum absolute difference between a current read data address and the previous read data addresses in the read history buffer (110).

13. The apparatus of claim 10, wherein the memory device includes a write history buffer (112) to maintain a write history of one or more previous write data addresses.

**Patentansprüche**

1. Verlaufsbasiertes Kompressionsverfahren, aufweisend:

Behalten eines Verlaufs eines beweglichen Fensters von zwei oder mehreren vorhergehenden Datenadressen, auf die durch einen Prozessor (10) zugegriffen wird, wobei die zwei oder mehrere vorhergehenden Datenadressen in dem Verlauf jede mit einem Index verbunden sind;
Bestimmen einer minimalen, absoluten Differenz zwischen der aktuellen Datenadresse und zwei oder mehr vorhergehenden Datenadressen in dem Verlauf des beweglichen Fensters; und
Bereitstellen, als eine Repräsentation der aktuellen Adresse, der minimalen, absoluten Differenz und ihres Vorzeichens und des Index, der mit einer der zwei oder mehreren vorhergehenden Datenadressen in dem Verlauf verbunden ist.

2. Verfahren gemäß Anspruch 1, wobei ein Behalten eines Verlaufs eines beweglichen Fensters ein Behalten eines Lese-Verlaufs von einer oder mehreren vorhergehenden Lese-Datenadressen beinhaltet, auf die durch den Prozessor (10) zugegriffen wird.

3. Verfahren gemäß Anspruch 2, wobei ein Bestimmen der minimalen, absoluten Differenz ein Bestimmen einer minimalen, absoluten Differenz zwischen einer aktuellen Lese-Datenadresse und den vorhergehenden Lese-Datenadressen in dem Verlauf des beweglichen Fensters beinhaltet.

**4.** Verfahren gemäß Anspruch 1, wobei ein Behalten eines Verlaufs eines beweglichen Fensters ein Behalten eines Schreib-Verlaufs von einer oder mehreren vorhergehenden Schreib-Datenadressen beinhaltet, auf die durch den Prozessor (10) zugegriffen wird.

**5.** Verfahren gemäß Anspruch 4, wobei ein Bestimmen der minimalen, absoluten Differenz ein Bestimmen einer minimalen, absoluten Differenz zwischen einer aktuellen Schreib-Datenadresse und den vorhergehenden Schreib-Datenadressen in dem Verlauf des beweglichen Fensters beinhaltet.

**6.** Verfahren gemäß Anspruch 1, wobei ein Behalten eines Verlaufs eines beweglichen Fensters ein Speichern der vorhergehenden Datenadressen in einem First-In-First-Out-Puffer beinhaltet.

**7.** Verfahren gemäß Anspruch 1, wobei ein Bestimmen der minimalen, absoluten Differenz ein Berechnen einer absoluten Differenz zwischen der aktuellen Datenadresse und jeder der zwei oder mehreren vorhergehenden Datenadressen in dem Verlauf und ein Auswählen der minimalen, absoluten Differenz von den berechneten absoluten Differenzen beinhaltet.

**8.** Verfahren gemäß Anspruch 1, weiter aufweisend ein Aktualisieren des Verlaufs des beweglichen Fensters.

**9.** Verfahren gemäß Anspruch 8, wobei ein Aktualisieren des Verlaufs des beweglichen Fensters ein Hinzufügen der aktuellen Datenadresse zu dem Verlauf und ein Entfernen einer ältesten vorhergehenden Datenadresse von dem Verlauf beinhaltet.

**10.** Vorrichtung für eine verlaufsbasierte Kompression, aufweisend:

einen Pufferspeicher (100), zum Behalten eines Verlaufs eines beweglichen Fensters von zwei oder mehreren vorhergehenden Datenadressen, auf die von einem Prozessor (10) zugegriffen wird, wobei jede der zwei oder mehreren vorhergehenden Datenadressen in dem Verlauf mit einem Index verbunden ist; und eine Kompressionsschaltung (102) zum Bestimmen einer minimalen, absoluten Differenz zwischen der aktuellen Datenadresse und zwei oder mehreren vorhergehenden Datenadressen in dem Verlauf des beweglichen Fensters und zum Bereitstellen, als die Repräsentation der aktuellen Datenadresse, der minimalen, absoluten Differenz und ihres Vorzeichens und eines korrespondierenden Index.

**11.** Vorrichtung gemäß Anspruch 10, wobei die Speichervorrichtung einen Lese-Verlaufspuffer (110) zum Behalten eines Lese-Verlaufs von einer oder mehreren vorhergehenden Lese-Datenadressen aufweist.

**12.** Vorrichtung gemäß Anspruch 11, wobei die Kompressionsschaltung (102) eingerichtet ist, eine minimale, absolute Differenz zwischen einer aktuelle Lese-Datenadresse und den vorhergehenden Lese-Datenadressen in dem Lese-Verlaufspuffer (110) zu bestimmen.

**13.** Vorrichtung gemäß Anspruch 10, wobei die Speichervorrichtung einen Schreib-Verlaufspuffer (112) zum Behalten eines Schreib-Verlaufs von einer oder mehreren vorhergehenden Schreib-Datenadressen aufweist.

## Revendications

**1.** Procédé de compression basée sur l'historique, comprenant le fait:

de maintenir un historique de fenêtre mobile de deux ou plusieurs adresses de données précédentes accessibles par un processeur (10), chacune des deux ou plusieurs adresses de données précédentes dans l'historique étant associée à un indice; de déterminer une différence absolue minimale entre l'adresse de données actuelle et deux ou plusieurs adresses de données précédentes dans l'historique de fenêtre mobile; et de fournir, en tant que représentation de l'adresse actuelle, la différence absolue minimale et son signe, et l'indice associé à l'une des deux ou plusieurs adresses de données précédentes dans l'historique.

**2.** Procédé de la revendication 1, dans lequel le maintien d'un historique de fenêtre mobile comprend le maintien d'un historique de lecture d'une ou de plusieurs adresse(s) de données de lecture précédente(s) accessible(s) par le processeur (10).

**3.** Procédé de la revendication 2, dans lequel la détermination de la différence absolue minimale comprend la détermination d'une différence absolue minimale entre une adresse de données de lecture actuelle et les adresses de données de lecture précédentes dans l'historique de fenêtre mobile.

**4.** Procédé de la revendication 1, dans lequel le maintien d'un historique de fenêtre mobile comprend le maintien d'un historique d'écriture d'une ou de plusieurs adresse(s) de données d'écriture précédente(s) accessible(s) par le processeur (10).

5. Procédé de la revendication 4, dans lequel la détermination de la différence absolue minimale comprend la détermination d'une différence absolue minimale entre une adresse de données d'écriture actuelle et les adresses de données d'écriture précédentes dans l'historique de fenêtre mobile.

6. Procédé de la revendication 1, dans lequel le maintien d'un historique de fenêtre mobile comprend le stockage des adresses de données précédentes dans un tampon premier entré, premier sorti.

7. Procédé de la revendication 1, dans lequel la détermination de la différence absolue minimale comprend le calcul d'une différence absolue entre l'adresse de données actuelle et chacune des deux ou plusieurs adresses de données précédentes dans l'historique, et la sélection de la différence absolue minimale à partir des différences absolues calculées.

8. Procédé de la revendication 1, comprenant en outre la mise à jour de l'historique de fenêtre mobile.

9. Procédé de la revendication 8, dans lequel la mise à jour de l'historique de fenêtre mobile comprend l'ajout de l'adresse de données actuelle à l'historique et la suppression de l'adresse de données précédente la plus ancienne de l'historique.

10. Appareil de compression basée sur l'historique, comprenant:

   une mémoire tampon (100) pour maintenir un historique de fenêtre mobile de deux ou plusieurs adresses de données précédentes accessibles par un processeur (10), chacune des deux ou plusieurs adresses de données précédentes dans l'historique étant associée à un indice; et
   un circuit de compression (102) pour déterminer une différence absolue minimale entre l'adresse de données actuelle et deux ou plusieurs adresses de données précédentes dans l'historique de fenêtre mobile, et pour fournir, comme étant la représentation de l'adresse de données actuelle, la différence absolue minimale et son signe, et un indice correspondant.

11. Appareil de la revendication 10, dans lequel le dispositif de mémoire comporte un tampon d'historique de lecture (110) pour maintenir un historique de lecture d'une ou de plusieurs adresse(s) de données de lecture précédente(s).

12. Appareil de la revendication 11, dans lequel le circuit de compression (102) est configuré pour déterminer une différence absolue minimale entre une adresse de données de lecture actuelle et les adresses de données de lecture précédentes dans le tampon d'historique de lecture (110).

13. Appareil de la revendication 10, dans lequel le dispositif de mémoire comporte un tampon d'historique d'écriture (112) pour maintenir un historique d'écriture d'une ou de plusieurs adresse(s) de données d'écriture précédente(s).

FIG. 1

FIG. 2

FIG. 3

200

FIG. 4

Sync? — Yes → B=0x40808080c0;
Output B;

No ↓

Interval? — Yes → B7:6=10b;
B5:3=L-1;
B2:0=P-1;
Output B; → Done

No ↓

-8<=D<8? — Yes → B7:=0;
B6:4=K;
B3:0=D;
Output B; → Done

No ↓

-512=D<512? — Yes → B15=D; B14:8 = D9:3;
B7:6 = 11b; B5:3 = K; B2:0 = D2:0;
Output B: → Done

No ↓

-65536<=D<65536? — Yes → B23 = 0; B22:16 = D16:10;
B15 = 1:B14:8 = D9:3;
B7:6 = 11b; B5:3 = K; B2:0 = D2:0;
Output B; → Done

No ↓

-8388608<=D<8388608? — Yes → B31 = 0; B30;24 = D23:17;
B23 = 1; B22:16 = D16:10;
B15 = 1; B14:8 = D9:3;
B7:6 = 11b; B5:3 = K; B2:0 = D2:0;
Output B; → Done

No ↓

B39:38 = 0; B37 = {K>=5}; B36:32 = A31:27;
B31 = 1; B30:24 = A26:20;
B23 = 1; B22:16 = A19:13;
B15 = 1;b14:8 = A12:6;
B7:6 = 11b; B5:0 = A5:0;
Output B; → Done

FIG. 5

148

150
Ctr ==0?

YES

H[k]:= 0; k=0, ..., 7
Assert Sync;
Ctr:= 32*SYNCFREQ;

190

152
NO

Ctr ;= Ctr-1;

154
Read?

NO

YES

160
Compute
D[K] := A-H[K]:
K=0,1,2,3,4

170
Compute
D[K] := A-H[K]:
K=5,6,7

162
Find K with
minimum
abs(D[K]);
Set D = D[K]

172
Find K with
minimum
abs(D[K]):
Set D := D[K]

164
Update History buffer:
H[K] := H[K-1], K=1,2,3,4;
H[0] := A;

174
Update History buffer:
H[K] := H[K-1], K=6,7;
H[5] := A;

180
Output A,K,D

FIG. 6

210

220

```
=== SENDING DAG: cb3e5676 R ===       0 cb3e5676 r 0 -885107082
=== SENDING DAG: cb3e5676 R ===       0 cb3e5676 r 0 0
=== SENDING DAG: cb3e5676 R ===       0 cb3e5676 r 0 0
=== SENDING DAG: cb3e5676 R ===       0 cb3e5676 r 0 0
=== SENDING DAG: cb3e5676 R ===       0 cb3e5676 r 0 0
=== SENDING DAG: cb3e5676 R ===  212  0 cb3e5676 r 0 0         222
=== SENDING DAG: cb3e5676 R ===       0 cb3e5676 r 0 0
=== SENDING DAG: cb3e5676 R ===       0 cb3e5676 r 0 0
=== SENDING DAG: cb3e5676 R ===       0 cb3e5676 r 0 0
=== SENDING DAG: 9abd61a6 R ===       0 9abd61a6 r 0 -813757648
=== SENDING DAG: 9abd61a6 R ===       0 9abd61a6 r 0 0
=== SENDING DAG: 9abd61a6 R ===       0 9abd61a6 r 0 0
=== SENDING DAG: 9abd61a6 R ===       0 9abd61a6 r 0 0
=== SENDING DAG: 9abd61a6 R ===       0 9abd61a6 r 0 0
=== SENDING DAG: 9abd61a6 R ===       0 9abd61a6 r 0 0
=== SENDING DAG: 9abd61a6 R ===       0 9abd61a6 r 0 0
=== SENDING DAG: 9abd61a6 R ===       0 9abd61a6 r 0 0
=== SENDING DAG: faa6a8e5 R ===       0 faa6a8e5 r 0 1609123647
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: faa6a8e5 R ===       0 faa6a8e5 r 0 0
=== SENDING DAG: 25ab24b6 R ===       0 25ab24b6 r 0 721714129
=== SENDING DAG: 25ab24b6 R ===       0 25ab24b6 r 0 0
=== SENDING DAG: 25ab24b6 R ===       0 25ab24b6 r 0 0
=== SENDING DAG: 25ab24b6 R ===       0 25ab24b6 r 0 0
=== SENDING DAG: 25ab24b6 R ===       0 25ab24b6 r 0 0
=== SENDING DAG: 25ab24b6 R ===       0 25ab24b6 r 0 0
=== SENDING DAG: 8b62be44 R ===       0 8b62be44 r 0 1706531214
=== SENDING DAG: 8b62be44 R ===       0 8b62be44 r 0 0
=== SENDING DAG: 8b62be44 R ===       0 8b62be44 r 0 0
=== SENDING DAG: 8b62be44 R ===       0 8b62be44 r 0 0
=== SENDING DAG: 8b62be44 R ===       0 8b62be44 r 0 0
=== SENDING DAG: 8b62be44 R ===       0 8b62be44 r 0 0
=== SENDING DAG: 8b62be44 R ===       0 8b62be44 r 0 0
=== SENDING DAG: 9e0a0029 R ===       0 9e0a0029 r 0 312951269
```

FIG. 7A

FIG. 7B

230

232

234

```
i K          D Address    G H
0 0          0 0x00000000 0 0
1 0          0 0x00000000 0 0
2 0          0 0x00000000 0 0
3 0          0 0x00000000 0 0
4 0          0 0x00000000 0 0
5 0          0 0x00000000 0 0
6 0          0 0x00000000 0 0
7 0          0 0x00000000 0 0
8 0          0 0x00000000 0 0
L = 0
5Byte time=0 Address=cb3e5676 r

i K          D Address    G H
0 0 -885107082 0xcb3e5676 0 0
1 0          0 0x00000000 0 0
2 0          0 0x00000000 0 0
3 0          0 0x00000000 0 0
4 0          0 0x00000000 0 0
5 0          0 0x00000000 0 0
6 0          0 0x00000000 0 0
7 0          0 0x00000000 0 0
8 0          0 0x00000000 0 0
L = 0

i K          D Address    G H
0 0          0 0xcb3e5676 0 0
1 0 -885107082 0xcb3e5676 0 0
2 0          0 0x00000000 1 1
3 0          0 0x00000000 1 1
4 0          0 0x00000000 1 1
5 0          0 0x00000000 1 1
6 0          0 0x00000000 1 1
7 0          0 0x00000000 1 1
8 0          0 0x00000000 1 1
L = 1

i K          D Address    G H
0 0          0 0xcb3e5676 0 0
1 0          0 0xcb3e5676 0 0
2 0 -885107082 0xcb3e5676 0 0
3 0          0 0x00000000 1 1
4 0          0 0x00000000 1 1
5 0          0 0x00000000 1 1
6 0          0 0x00000000 1 1
7 0          0 0x00000000 1 1
8 0          0 0x00000000 1 1
L = 2
```

```
i K          D Address    G H
0 0          0 0xcb3e5676 0 0
1 0          0 0xcb3e5676 0 0
2 0          0 0xcb3e5676 0 0
3 0 -885107082 0xcb3e5676 0 0
4 0          0 0x00000000 1 1
5 0          0 0x00000000 1 1
6 0          0 0x00000000 1 1
7 0          0 0x00000000 1 1
8 0          0 0x00000000 1 1
L = 3

i K          D Address    G H
0 0          0 0xcb3e5676 0 0
1 0          0 0xcb3e5676 0 0
2 0          0 0xcb3e5676 0 0
3 0          0 0xcb3e5676 0 0
4 0 -885107082 0xcb3e5676 0 0
5 0          0 0x00000000 1 1
6 0          0 0x00000000 1 1
7 0          0 0x00000000 1 1
8 0          0 0x00000000 1 1
L = 4

i K          D Address    G H
0 0          0 0xcb3e5676 0 0
1 0          0 0xcb3e5676 0 0
2 0          0 0xcb3e5676 0 0
3 0          0 0xcb3e5676 0 0
4 0          0 0xcb3e5676 0 0
5 0 -885107082 0xcb3e5676 0 0
6 0          0 0x00000000 1 1
7 0          0 0x00000000 1 1
8 0          0 0x00000000 1 1
L = 5

i K          D Address    G H
0 0          0 0xcb3e5676 0 0
1 0          0 0xcb3e5676 0 0
2 0          0 0xcb3e5676 0 0
3 0          0 0xcb3e5676 0 0
4 0          0 0xcb3e5676 0 0
5 0          0 0xcb3e5676 0 0
6 0 -885107082 0xcb3e5676 0 0
7 0          0 0x00000000 1 1
8 0          0 0x00000000 1 1
L = 6
```

FIG. 7C

To (A)

(A)

```
i K          D Address    G H
0 0          0 0xcb3e5676 0 0
1 0          0 0xcb3e5676 0 0
2 0          0 0xcb3e5676 0 0
3 0          0 0xcb3e5676 0 0
4 0          0 0xcb3e5676 0 0
5 0          0 0xcb3e5676 0 0
6 0          0 0xcb3e5676 0 0
7 0 -885107082 0xcb3e5676 0 0
8 0          0 0x00000000 1 1
L = 7
1Byte time=0 position=8 length=7
1Byte time=0 index=0 difference=0

i K          D Address    G H
0 0          0 0xcb3e5676 0 0
1 0          0 0xcb3e5676 0 0
2 0          0 0xcb3e5676 0 0
3 0          0 0xcb3e5676 0 0
4 0          0 0xcb3e5676 0 0
5 0          0 0xcb3e5676 0 0
6 0          0 0xcb3e5676 0 0
7 0          0 0xcb3e5676 0 0
8 0 -885107082 0xcb3e5676 1 0
L = 0
5Byte time=0 Address=9abd61a6 r

i K          D Address    G H
0 0 -813757648 0x9abd61a6 0 0
1 0          0 0xcb3e5676 0 0
2 0          0 0xcb3e5676 0 0
3 0          0 0xcb3e5676 0 0
4 0          0 0xcb3e5676 0 0
5 0          0 0xcb3e5676 0 0
6 0          0 0xcb3e5676 0 0
7 0          0 0xcb3e5676 0 0
8 0          0 0xcb3e5676 1 0
L = 0

i K          D Address    G H
0 0          0 0x9abd61a6 0 0
1 0 -813757648 0x9abd61a6 0 0
2 0          0 0xcb3e5676 1 1
3 0          0 0xcb3e5676 1 1
4 0          0 0xcb3e5676 1 1
5 0          0 0xcb3e5676 1 1
6 0          0 0xcb3e5676 1 1
7 0          0 0xcb3e5676 1 1
8 0          0 0xcb3e5676 1 1
L = 1
```

230

```
i K          D Address    G H
0 0          0 0x9abd61a6 0 0
1 0          0 0x9abd61a6 0 0
2 0 -813757648 0x9abd61a6 0 0
3 0          0 0xcb3e5676 1 1
4 0          0 0xcb3e5676 1 1
5 0          0 0xcb3e5676 1 1
6 0          0 0xcb3e5676 1 1
7 0          0 0xcb3e5676 1 1
8 0          0 0xcb3e5676 1 1
L = 2

i K          D Address    G H
0 0          0 0x9abd61a6 0 0
1 0          0 0x9abd61a6 0 0
2 0          0 0x9abd61a6 0 0
3 0 -813757648 0x9abd61a6 0 0
4 0          0 0xcb3e5676 1 1
5 0          0 0xcb3e5676 1 1
6 0          0 0xcb3e5676 1 1
7 0          0 0xcb3e5676 1 1
8 0          0 0xcb3e5676 1 1
L = 3

i K          D Address    G H
0 0          0 0x9abd61a6 0 0
1 0          0 0x9abd61a6 0 0
2 0          0 0x9abd61a6 0 0
3 0          0 0x9abd61a6 0 0
4 0 -813757648 0x9abd61a6 0 0
5 0          0 0xcb3e5676 1 1
6 0          0 0xcb3e5676 1 1
7 0          0 0xcb3e5676 1 1
8 0          0 0xcb3e5676 1 1
L = 4

i K          D Address    G H
0 0          0 0x9abd61a6 0 0
1 0          0 0x9abd61a6 0 0
2 0          0 0x9abd61a6 0 0
3 0          0 0x9abd61a6 0 0
4 0          0 0x9abd61a6 0 0
5 0 -813757648 0x9abd61a6 0 0
6 0          0 0xcb3e5676 1 1
7 0          0 0xcb3e5676 1 1
8 0          0 0xcb3e5676 1 1
L = 5
```

FIG. 7D

240

```
=== RECEIVING (DUT): f6 ===
=== RECEIVING (DUT): d9 ===
=== RECEIVING (DUT): f2 ===
=== RECEIVING (DUT): b3 ===
=== RECEIVING (DUT): 19 ===
=== RECEIVING (DUT): b7 ===
=== RECEIVING (DUT): 00 ===
=== RECEIVING (DUT): e6 ===
=== RECEIVING (DUT): 86 ===
=== RECEIVING (DUT): eb ===
=== RECEIVING (DUT): ab ===
=== RECEIVING (DUT): 13 ===
=== RECEIVING (DUT): b7 ===
=== RECEIVING (DUT): 00 ===
=== RECEIVING (DUT): e5 ===
=== RECEIVING (DUT): a3 ===
=== RECEIVING (DUT): b5 ===
=== RECEIVING (DUT): aa ===
=== RECEIVING (DUT): 1f ===
=== RECEIVING (DUT): b7 ===
=== RECEIVING (DUT): 00 ===
=== RECEIVING (DUT): 87 ===
=== RECEIVING (DUT): f6 ===
=== RECEIVING (DUT): 92 ===
=== RECEIVING (DUT): d9 ===
=== RECEIVING (DUT): da ===
=== RECEIVING (DUT): 04 ===
=== RECEIVING (DUT): af ===
=== RECEIVING (DUT): c4 ===
=== RECEIVING (DUT): f9 ===
=== RECEIVING (DUT): 95 ===
=== RECEIVING (DUT): b6 ===
=== RECEIVING (DUT): 11 ===
=== RECEIVING (DUT): ae ===
=== RECEIVING (DUT): e9 ===
=== RECEIVING (DUT): 80 ===
=== RECEIVING (DUT): d0 ===
=== RECEIVING (DUT): e0 ===
=== RECEIVING (DUT): 13 ===
```

FIG. 7E

250

```
|PACKET| Multi-byte(5) individual access: 19b3f2d9f6
|PACKET| Interval access: {L,P} = {7,7}
|PACKET| Single byte individual access: 00
|PACKET| Multi-byte(5) individual access: 13abeb86e6
|PACKET| Interval access: {L,P} = {7,7}
|PACKET| Single byte individual access: 00
|PACKET| Multi-byte(5) individual access: 1faab5a3e5
|PACKET| Interval access: {L,P} = {7,7}
|PACKET| Single byte individual access: 00
|PACKET| Interval access: {L,P} = {1,7}
|PACKET| Multi-byte(5) individual access: 04dad992f6
|PACKET| Interval access: {L,P} = {6,7}
|PACKET| Multi-byte(5) individual access: 11b695f9c4
|PACKET| Interval access: {L,P} = {6,6}
|PACKET| Multi-byte(5) individual access: 13e0d080e9
```

FIG. 7F

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6918065 B1
- WO 9957640 A1
- US 6182022 B1

### Non-patent literature cited in the description

- Lossless Address Trace Compression For Reducing File Size and Access Time. **ERIC E. JOHNSON et al.** Proceedings of the annual international Phoenix Conference on Computers and Communications. IEEE, 1994, vol. 13, 213-219
- Mache: No-Loss Trace Compaction. *ACM Sigmetrics Performance Evaluation Review,* 1989, vol. 17 (1), 89-97
- **ERIC E. JOHNSON et al.** Lossless Trace Compression. *IEEE Transactions on Computers,* February 2001, vol. 50 (2), 158-173